# FASCICULE DE BREVET EUROPEEN

(11) **EP 1 029 453 B1**
(45) Date de publication et mention de la délivrance du brevet: **14.04.2004**
(21) Numéro de dépôt: 00400436.2
(22) Date de dépôt: 16.02.2000
(51) Int. Cl.: A01M 29/00

(54) **Réglette pour la pose de dispositifs anti-volatiles**
Lineal zum Verlegen von Vorrichtungen gegen Vögel
Strip for laying of devices against birds

(30) Priorité: 16.02.1999 FR 9901856
(43) Date de publication de la demande: 23.08.2000
(73) Titulaire: Karaa, Camil, 92200 Neuilly Sur Seine (FR)
(72) Inventeur: Karaa, Camil, 92200 Neuilly Sur Seine (FR)
(74) Mandataire: Leszczynski, André

(56) Documents cités:
- WO-A-95/31099
- CH-A- 679 971

## Description

La présente invention concerne la pose de dispositifs anti-volatiles, et plus particulièrement mais non exclusivement ceux constitués de barrettes munies de pics.

De tels dispositifs sont notamment utilisés pour empêcher les pigeons de se poser sur le rebord des fenêtres.

Leur pose est traditionnellement effectuée par des professionnels tels que les couvreurs.

Toutefois, des kits apparaissent dans le grand public pour permettre à l'usager d'effectuer lui-même la pose lorsque les surfaces à protéger sont facilement accessibles.

La pose par une personne non expérimentée n'est cependant pas toujours menée de manière optimale, faute de pouvoir appréhender aisément l'étendue de la protection conférée par les dispositifs anti-volatiles utilisés.

CH-A-679 971 décrit un élément de fixation de dispositifs anti-volatiles comportant des découpes pour le passage des dispositifs, ces découpes déterminant l'écartement des dispositifs anti-volatiles. L'élément reste à demeure sur la structure sur laquelle sont disposés les dispositifs anti-volatiles.

La présente invention se propose de permettre la pose dans des positions définies de dispositifs anti-volatiles sans nécessiter d'élément supplémentaire devant rester en place.

L'invention a pour objet une réglette d'aide à la pose de dispositifs anti-volatiles, telle que définie dans la revendication 1.

Ainsi, grâce à l'invention, l'usager même non-expérimenté peut aisément positionner les dispositifs anti-volatiles sur la surface à protéger sans craindre de laisser des zones non protégées.

Dans le cas où les dispositifs anti-volatiles utilisés sont constitués par des barrettes munies de pics, ces repères auxiliaires sont de préférence disposés sur la réglette pour matérialiser la projection au sol des extrémités supérieures des pics situés du côté du bord de la surface à protéger.

Dans ce cas également, la largeur des repères principaux correspond de préférence sensiblement à celle de l'extrémité des barrettes, de manière à faciliter encore le positionnement de ces dernières sur la surface à protéger.

Avantageusement, un dégradé est imprimé entre chaque repère principal et le repère auxiliaire associé.

Avantageusement encore, la distance entre chaque repère principal et le repère auxiliaire associé est inférieure à la moitié du pas avec lequel les repères principaux sont disposés sur la réglette.

Avantageusement encore, la réglette est à découper dans une feuille cartonnée assemblée à un blister contenant les dispositifs anti-volatiles à l'état démonté.

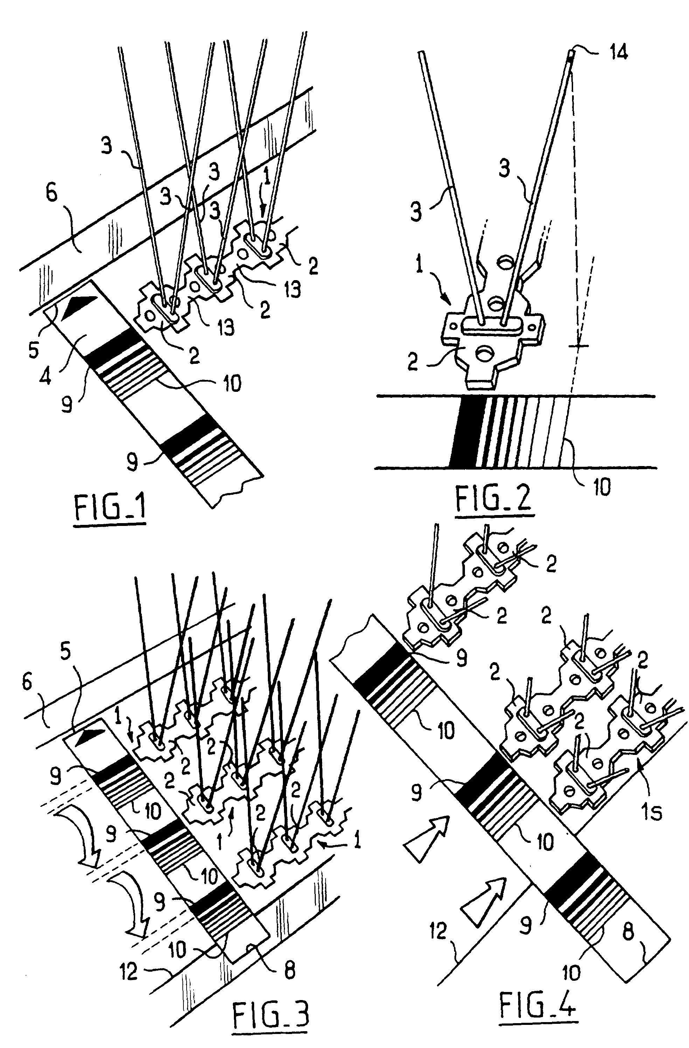

L'invention sera mieux comprise à la lecture de la description détaillée qui va suivre, d'un exemple de mise en oeuvre non limitatif, et à l'examen du dessin annexé sur lequel les figures 1 à 4 illustrent différentes étapes de la mise en place des barrettes à l'aide de la réglette.

On a représenté sur la figure 1 une barrette 1 comportant une succession de supports 2 reliés entre eux par des portions amincies 13 permettant de les séparer si nécessaire.

Un fil métallique ayant la forme générale d'un V est fixé par-dessous sur chaque support 2, laissant dépasser deux pics 3 formant un angle entre eux en s'écartant vers le haut.

Conformément à l'invention, la barrette 1 est positionnée avant sa fixation sur la surface à protéger au moyen d'une colle à base de silicone par exemple, à l'aide d'une réglette amovible 4 dont une extrémité 5 est positionnée contre l'encadrement de fenêtre 6 ou mur ou analogue bordant vers l'intérieur la surface à protéger.

L'autre extrémité 8 de la réglette 4 peut déborder dans le vide, comme illustré sur les figures 3 et 4.

La réglette 4 comporte un ensemble de repères principaux imprimés 9 disposés avec un écartement régulier, correspondant à l'écartement que doivent avoir sur la surface à protéger les barrettes 1 pour conférer une protection optimale.

A titre d'exemple, on a représenté sur la figure 3 trois barrettes 1 positionnées selon les repères principaux 9.

La réglette 4 comporte également un ensemble de repères auxiliaires imprimés 10 disposés sur la réglette 4 avec la même périodicité que les repères principaux 9.

Ainsi, à chaque repère principal 9 est associé un repère auxiliaire 10, lequel est positionné sur la réglette 4 de manière à matérialiser la projection au sol de l'extrémité supérieure 14 du pic 3 situé du côté du bord 12 de la surface à protéger, comme on peut le voir sur la figure 2.

Dans l'exemple décrit, les repères auxiliaires 10 se situent après chaque repère principal 9 à une distance, en s'éloignant de l'extrémité 5, qui est inférieure à la moitié du pas avec lequel sont disposés les repères principaux 9 sur la réglette 4.

En règle générale, l'écartement entre les repères principaux 9 et le positionnement des repères auxiliaires 10 dépend de la nature des barrettes 1 utilisées et pourrait bien entendu être modifié sans que l'on sorte du cadre de la présente invention.

Les repères auxiliaires 10 sont utiles pour savoir s'il est nécessaire, lorsque le bord 12 de la surface à protéger tombe entre deux repères principaux 9, de prévoir une barrette 1 supplémentaire.

Dans le cas de l'exemple de la figure 3, on voit que le bord 12 tombe entre un repère principal 9 et le repère auxiliaire 10 associé, ce qui signifie que la zone située entre le bord 12 et la troisième barrette 1 à partir de l'encadrement 6 est protégée.

Par contre, dans le cas de l'exemple de la figure 4, on voit que le bord 12 se situe en dehors de la zone de protection conférée par la barrette 1 positionnée conformément au dernier repère principal 9 se trouvant sur la surface à protéger, de sorte qu'il est nécessaire de prévoir une barrette supplémentaire 1s pour empêcher les volatiles de se poser sur le bord 12.

Dans l'exemple décrit, entre chacun des repères principaux 9 et le repère auxiliaire 10 associé, on imprime un dégradé pour faciliter la perception par l'utilisateur de la zone protégée.

La réglette 4 est avantageusement découpée dans une feuille cartonnée sur laquelle est rapportée un blister contenant les supports et les pics à assembler avec ces derniers pour constituer les barrettes, ainsi que la colle permettant de fixer les barrettes sur la surface à protéger.

Bien entendu, on ne sort pas du cadre de la présente invention en utilisant tout autre matériau pour réaliser la réglette.

Dans l'exemple décrit en référence aux figures, les dispositifs anti-volatiles utilisés sont constitués par des barrettes munies de pics.

Dans une variante non illustrée sur les figures, les dispositifs anti-volatiles sont constitués par des câbles parallèles tendus entre des supports fixés sur la surface à protéger.

La réglette comporte un ensemble de repères principaux permettant de positionner les supports des câbles de manière optimale, ainsi qu'un ensemble de repères auxiliaires matérialisant l'étendue de la protection conférée par les câbles, et permettant de déterminer si l'ajout d'un câble est nécessaire lorsque le bord de la surface à protéger tombe entre deux repères principaux.

## Revendications

1. Réglette d'aide à la pose de dispositifs anti-volatiles (3) comportant, un ensemble de repères (9) principaux spécifiques aux dispositifs anti-volatiles utilisés et disposés avec un pas correspondant à celui avec lequel lesdits dispositifs doivent être positionnés sur la surface à protéger pour conférer une protection optimale, **caractérisée par le fait qu'**elle comporte un ensemble de repères auxiliaires (10) permettant de déterminer, lorsque le bord (12) de la surface à protéger tombe entre deux repères principaux (9), si l'ajout d'un dispositif anti-volatiles supplémentaire (1s) est nécessaire.

2. Réglette selon la revendication 1, **caractérisée par le fait qu'**un dégradé est imprimé entre chaque repère principal (9) et le repère auxiliaire associé (10).

3. Réglette selon l'une des revendications 1 et 2, **caractérisée par le fait que** la distance entre chaque repère principal (9) et le repère auxiliaire associé (10) est inférieure à la moitié du pas avec lequel les repères principaux (9) sont disposés sur la réglette (4).

4. Réglette selon l'une quelconque des revendications 1 à 4, d'aide à la pose de dispositifs anti-volatiles utilisés sont constitués par des barrettes munies de pics, **caractérisée par le fait que** les repères auxiliaires (10) sont disposés sur la réglette (4) pour matérialiser la projection au sol des extrémités supérieures (14) des pics situés du côté du bord (12) de la surface à protéger.

5. Réglette selon la revendication 4, **caractérisée par le fait que** la largeur des repères principaux (9) correspond sensiblement à celle de l'extrémité des barrettes (4).

6. Réglette selon l'une quelconque des revendications 4 et 5, **caractérisée par le fait que** les pics (3) forment un angle entre eux.

7. Réglette selon l'une quelconque des revendications précédentes, **caractérisée par le fait qu'**elle est à découper dans une feuille cartonnée assemblée à un blister contenant les dispositifs anti-volatiles à l'état démonté.

## Claims

1. Strip for assisting the laying of anti-bird devices (3), comprising a set of principal marks (9) specific to the anti-bird devices used and disposed at a pitch corresponding to that at which the said devices must be positioned on the surface to be protected in order to confer optimum protection,
**characterised by** the fact that it comprises a set of ancillary marks (10) for determining, when the edge (12) of the surface to be protected falls between two principal marks (9), whether the addition of a supplementary anti-bird device (1s) is necessary.

2. Strip according to Claim 1, **characterised by** the fact that a shading is printed between each principal mark (9) and the associated ancillary mark (10).

3. Strip according to one of Claims 1 and 2, **characterised by** the fact that the distance between each principal mark (9) and the associated ancillary mark (10) is less than half the pitch at which the principal marks (9) are disposed on the strip (4).

4. Strip according to any one of Claim 1 to 4, for assisting with the laying of anti-bird devices used consisting of bars provided with spikes, **characterised by** the fact that the ancillary marks (10) are disposed on the strip (4) in order to represent the projection onto the ground of the top end (14) of the spikes situated on the same side as the edge (12) of the surface to be protected.

5. Strip according to Claim 4, **characterised by** the fact that the width of the principal marks (9) corresponds substantially to that of the end of the bars (4).

6. Strip according to either one of Claims 4 and 5, **characterised by** the fact that the spikes (3) form an angle between them.

7. Strip according to any one of the preceding claims, **characterised by** the fact that it is to be cut from a bound sheet assembled in a blister pack containing the anti-bird devices in the demounted state.

## Patentansprüche

1. Lineal zur Hilfe beim Aufstellen von Vogelabwehrvorrichtungen (3) mit einer Gruppe von die Vorrichtungen angebenden Hauptmarkierungen (9), die mit einer Teilung angeordnet sind, die derjenigen entspricht, mit dem die Vorrichtungen auf der zu schützenden Oberfläche angebracht werden sollen, um optimalen Schutz zu bieten, **gekennzeichnet durch** eine Gruppe von Hilfsmarkierungen (10), die die Entscheidung ermöglicht, ob eine zusätzliche Vorrichtung (1s) notwendig ist, wenn der Rand (12) der zu schützenden Oberfläche zwischen zwei Hauptmarkierungen (9) fällt.

2. Lineal nach Anspruch 1, wobei zwischen jeder Hauptmarkierung (9) und der zugehörigen Hilfsmarkierung (10) eine Abstufung aufgedruckt ist.

3. Lineal nach einem der Ansprüche 1 und 2, wobei der Abstand zwischen jeder Hauptmarkierung (9) und der zugehörigen Hilfsmarkierung (10) kleiner ist als die halbe Teilung, mit der die Hauptmarkierungen (9) auf dem Lineal (4) angeordnet sind.

4. Lineal nach einem der Ansprüche 1 bis 4 zur Hilfe beim Aufstellen von Vogelabwehrvorrichtungen, die als mit Domen ausgestattete Leisten ausgebildet sind, wobei die Hilfsmarkierungen (10) auf dem Lineal (4) so angeordnet sind, daß sie die Vertikalprojektion der oberen Spitzen (14) der am Rand (12) der zu schützenden Oberfläche gelegenen Domen markieren.

5. Lineal nach Anspruch 4, wobei die Breite der Hauptmarkierungen genau der Breite des Endes der Leiste (4) entspricht.

6. Lineal nach Anspruch 4 oder 5, wobei die Domen (3) miteinander einen Winkel bilden.

7. Lineal nach einem der vorhergehenden Ansprüche zum Ausschneiden aus einem Kartonblatt, das an einer die Vogelabwehrvorrichtungen in unmontiertem Zustand enthaltenden Blisterpackung angebracht ist.
